# EUROPEAN PATENT APPLICATION

(11) **EP 4 431 193 A1**
(43) Date of publication of application: **18.09.2024**
(21) Application number: 22891945.2
(22) Date of filing: 07.11.2022
(51) Int. Cl.: B08B 3/02, G01S 7/481

(54) **RADAR DECORATIVE COVER ASSEMBLY, LIDAR DEVICE HAVING SAME, AND VEHICLE**

(30) Priority: 09.11.2021 CN 202122734781 U
(71) Applicant: Beijing Chehejia Automobile Technology Co., Ltd., Beijing 101300 (CN)
(72) Inventor: DING, Chunpeng, Beijing 101300 (CN); JIANG, Xin, Beijing 101300 (CN); LI, Caibo, Beijing 101300 (CN); ZHENG, Yuduan, Beijing 101300 (CN); LIANG, Shaolong, Beijing 101300 (CN)
(74) Representative: advotec.
(86) International application number: PCT/CN2022/130433
(87) International publication number: WO 2023/083151

(57) **Abstract**

A radar decorative cover assembly (100), comprising: mounting bases (2) and nozzle assemblies (10). Each of the mounting bases (2) is provided with a first mounting hole (21) extending in a preset direction. Each of the nozzle assemblies (10) comprises a telescopic nozzle (1) and a nozzle decorative lid (6); the nozzle decorative lid (6) is connected to a free end of the telescopic nozzle 1; the nozzle decorative lid (6) is used to match a through hole (41) of a radar decorative cover (4); and the telescopic nozzle (1) is movably provided between a retracting position and an extending position in the preset direction, wherein at least part of the peripheral surface of the telescopic nozzle (1) located at the retracting position is located in the first mounting hole (21), and at least part of the peripheral surface of the telescopic nozzle (1) located at the retracting position matches at least part of the peripheral wall surface of the first mounting hole (21). Also disclosed are a lidar device (300) having the radar decorative cover assembly and a vehicle. The radar decorative cover assembly can reduce a reserved gap between the nozzle decoration lid and the through hole of the radar decoration cover, thereby effectively reduce the entry of dust into the radar decorative cover.

## Description

### CROSS-REFERENCE TO RELATED APPLICATION

This application claims priority to Chinese Patent Application No. 202122734781.5, filed on November 9, 2021, the entire content of which is incorporated herein by reference.

### FIELD

The present disclosure relates to the field of automotive technology, and more particularly to a radar decorative cover assembly, a lidar device having the same, and a vehicle.

### BACKGROUND

In the related art, a lidar device 100' includes a radar decorative cover 3' having a cavity and a through hole in communication with the cavity; and a nozzle assembly including a telescopic nozzle 1' and a nozzle decorative lid. The nozzle decorative lid is coupled to a free end of the telescopic nozzle 1', and a fixed end of the telescopic nozzle 1' is provided with a positioning piece 11' extending along a radial direction of the telescopic nozzle 1'. The positioning piece 11' defines a penetration hole, and the telescopic nozzle 1' is fixed in the radar decorative cover 3' by cooperation of a screw 2' and the penetration hole. The telescopic nozzle assembly has an extended position and a retracted position, the extended position is where the free end of the telescopic nozzle 1' and the nozzle decorative lid are located outside the radar decorative cover 3', and the retracted position is where the free end of the telescopic nozzle 1' is located inside the radar decorative cover 3'. When there is no need to clean the radar decorative cover 3', the telescopic nozzle 1' is located in the retracted position, and the nozzle decorative lid is flush with an outer surface of the radar decorative cover 3'; and when it is necessary to clean the radar decorative cover 3', the telescopic nozzle assembly is located in the extended position, and the telescopic nozzle 1' sprays cleaning fluid to clean a surface of the radar decorative cover 3' to be cleaned.

Due to a gap between the penetration hole of the positioning piece 11' and the screw 2', the positioning accuracy of the telescopic nozzle 1' on the radar decorative cover 3' is poor. During the reciprocating movement of the telescopic nozzle assembly between the extended position and the retracted position, the nozzle decorative lid and the through hole of the radar decorative cover 3' will interfere, such that it is necessary to reserve an sufficient gap between the through hole of the radar decorative cover 3' and the nozzle decorative lid in the design stage for tolerance absorption. However, if the gap between the through hole of the radar decorative cover 3' and the nozzle decorative lip is too large, it will affect the aesthetics of the automobile and cause external dust to easily enter an interior of the radar decorative cover 3'.

### SUMMARY

Embodiments of the present disclosure propose a radar decorative cover assembly, which may reduce a reserved gap between a nozzle decorative lid and a through hole of the radar decorative cover, thereby effectively reducing entry of dust into the radar decorative cover.

The radar decorative cover assembly according to embodiments of the present disclosure includes a mounting base mounted in an accommodating cavity and having a first mounting hole extending in a preset direction; and a nozzle assembly including a telescopic nozzle and a nozzle decorative lid. The nozzle decorative lid is coupled to a free end of the telescopic nozzle, the nozzle decorative lid is configured to fit with a through hole of a radar decorative cover, and the telescopic nozzle is movably arranged between a retracted position and an extended position in the preset direction. At least part of the telescopic nozzle in the retracted position is located in the first mounting hole, and at least part of an outer peripheral surface of the telescopic nozzle in the retracted position fits with at least part of a peripheral wall surface of the first mounting hole.

The radar decorative cover assembly according to embodiments of the present disclosure, by fitting of the outer peripheral surface of the telescopic nozzle and the peripheral wall surface of the first mounting hole, improves the mounting accuracy of the telescopic nozzle on the radar decorative cover, and simultaneously, reduces the reserved gap between the nozzle decorative lid coupled to the telescopic nozzle and the through hole of the radar decorative cover, effectively reducing the entry of dust into the radar decorative cover.

In some embodiments, the first mounting hole is a cylindrical hole, a first part of the outer peripheral surface of the telescopic nozzle is at least part of a cylindrical surface, the first part of the outer peripheral surface of the telescopic nozzle in the retracted position fits with at least part of the peripheral wall surface of the first mounting hole.

In some embodiments, the peripheral wall surface of the first mounting hole defines a guide groove extending along the preset direction, the outer peripheral surface of the telescopic nozzle is provided with a first guide key extending along the preset direction, and the first guide key is movably fitted in the guide groove in the preset direction.

In some embodiments, the first guide key has a width direction orthogonal to a radial direction and an axial direction of the telescopic nozzle, and a size of a cross section of the first guide key in the width direction of the first guide key gradually decreases in a direction away from the nozzle decorative lid.

In some embodiments, two first guide keys are provided, an axis of one of the two first guide keys and an axis of the telescopic nozzle are located in a first plane, an axis of the other of the two first guide keys and the axis of the telescopic nozzle are located in a second plane, an angle between the first plane and the second plane is obtuse or flat, and a size of a cross section of the first guide key in a radial direction of the telescopic nozzle gradually decreases in the direction away from the nozzle decorative lid.

In some embodiments, the radar decorative cover assembly further includes a radar decorative cover having an accommodating cavity and the through hole in communication with the accommodating cavity, the mounting base is arranged in the accommodating cavity, a shape and a size of the nozzle decorative lid are adapted to a shape and a size of the through hole, and when the telescopic nozzle is in the retracted position and the telescopic nozzle is retracted to the shortest, an outer surface of the nozzle decorative lid is flush with an outer surface of the radar decorative cover.

In some embodiments, the radar decorative cover assembly further includes a support defining a second mounting hole coaxial with the first mounting hole, the outer peripheral surface of the telescopic nozzle is provided with a clip, a peripheral wall surface of the second mounting hole defines a slot, the clip of the telescopic nozzle in the retracted position is elastically deformed and snapped into the slot, and the clip of the telescopic nozzle in the extended position is detached from the slot.

In some embodiments, the clip is located at an end of the first guide key close to the nozzle decorative lid.

In some embodiments, two slots are provided and symmetrically arranged at two sides of the axis of the telescopic nozzle, two clips are provided, and the two clips located in the retracted position are simultaneously snapped into the two slots.

In some embodiments, the support and the mounting base are spaced along a front and rear direction, the clip has a first step located at a front end of the clip and a second step located at a rear end of the clip, and a minimum distance from an edge of a front end of a step surface of the second step to the axis of the telescopic nozzle is greater than a minimum distance from an edge of a rear end of a step surface of the first step to the axis of the telescopic nozzle; when the telescopic nozzle is in the retracted position, the clip is elastically deformed, and the second step of the clip is located between the support and the mounting base; and when the telescopic nozzle is in the extended position, the clip is elastically deformed, and the second step of the clip is detached from the support and the mounting base.

In some embodiments, the radar decorative cover assembly further includes a cleaning cover, an outer surface of the radar decorative cover defines a third mounting hole, the cleaning cover is arranged at the third mounting hole, two nozzle assemblies are provided, and the two nozzle assemblies are arranged at two sides of the cleaning cover.

In some embodiments, an outer peripheral wall of the radar decorative cover defines a groove, the third mounting hole is located in the groove, and a depth of the groove is equal to a thickness of the cleaning cover.

Embodiments of the present disclosure further provide a lidar device including a lidar and a radar decorative cover assembly according to any one of the above embodiments, and the lidar is mounted in an accommodating cavity of the radar decorative cover assembly.

Embodiments of the present disclosure further provide a vehicle including a lidar device in the above embodiments.

### BRIEF DESCRIPTION OF THE DRAWINGS

FIG. 1 is a schematic view of a lidar device according to an embodiment of the present disclosure;
FIG. 2 is a schematic view of a radar decorative cover assembly according to an embodiment of the present disclosure;
FIG. 3 is a perspective view of a radar decorative cover in FIG. 2;
FIG. 4 is a front view of a radar decorative cover in FIG. 2;
FIG. 5 is a top view of a radar decorative cover in FIG. 2;
FIG. 6 is a left view of a radar decorative cover in FIG. 2;
FIG. 7 is a bottom view of a radar decorative cover in FIG. 2;
FIG. 8 is another perspective view of a radar decorative cover in FIG. 2;
FIG. 9 is a partial enlarged view of part A of FIG. 8;
FIG. 10 is a front view of a nozzle assembly in FIG. 2;
FIG. 11 is a left view of FIG. 10;
FIG. 12 shows a lidar device in the related art.

### References signs:

lidar device 300;
lidar 200;
radar decorative cover assembly 100;
nozzle assembly 10;
telescopic nozzle 1;
first guide key 11; clip 12; first step 121; second step 122;
mounting base 2;
first mounting hole 21; guide groove 22;
support 3;
second mounting hole 31; slot 32;
radar decorative cover 4;
through hole 41; third mounting hole 42; groove 43; accommodating cavity 44;
cleaning cover 5;
nozzle decorative lid 6; lidar cleaning device 100' in the related art;
telescopic nozzle 1' in the related art; positioning piece 11';
screw 2';
radar decorative cover 3' in the related art.

### DETAILED DESCRIPTION

Embodiments of the present disclosure are described in detail below, examples of which are illustrated in the accompanying drawings. The following embodiments described with reference to the accompanying drawing are illustrative. It should be understood that the embodiments described are intended to explain the present disclosure, but not to limit the present disclosure.

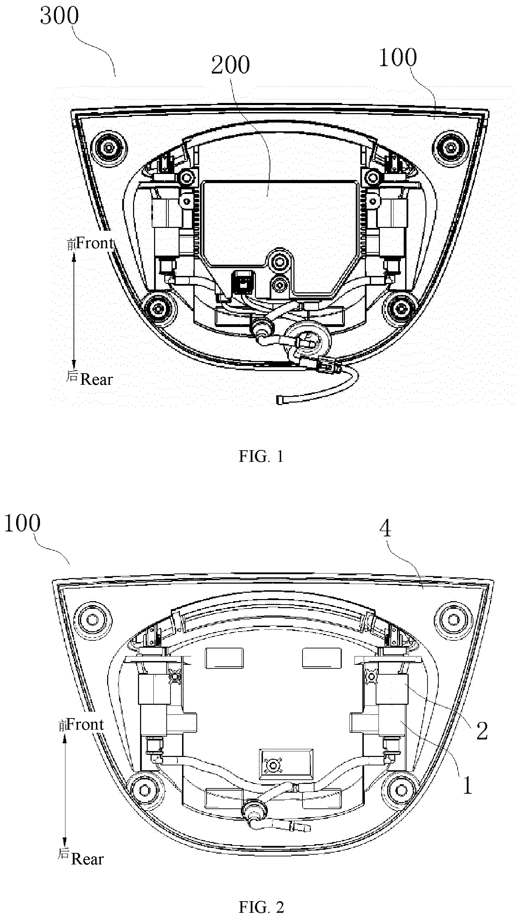

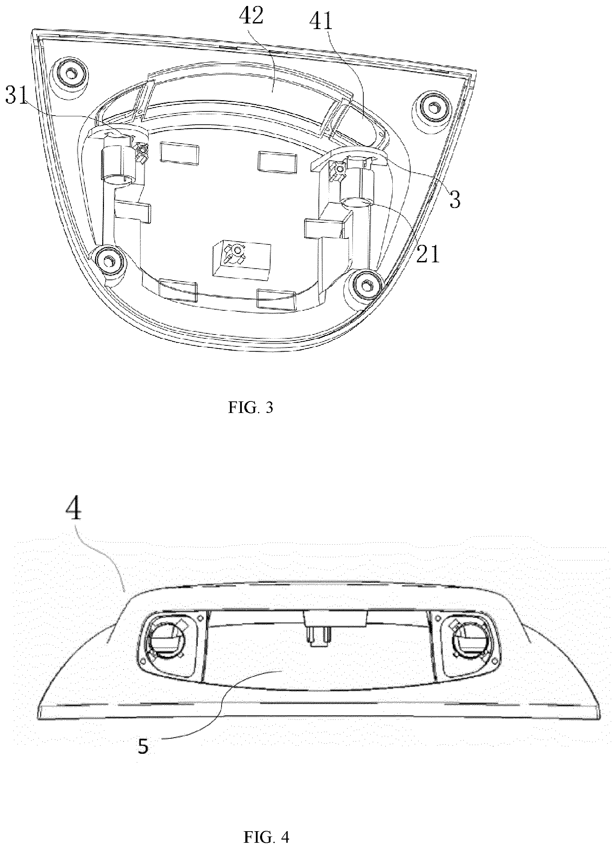

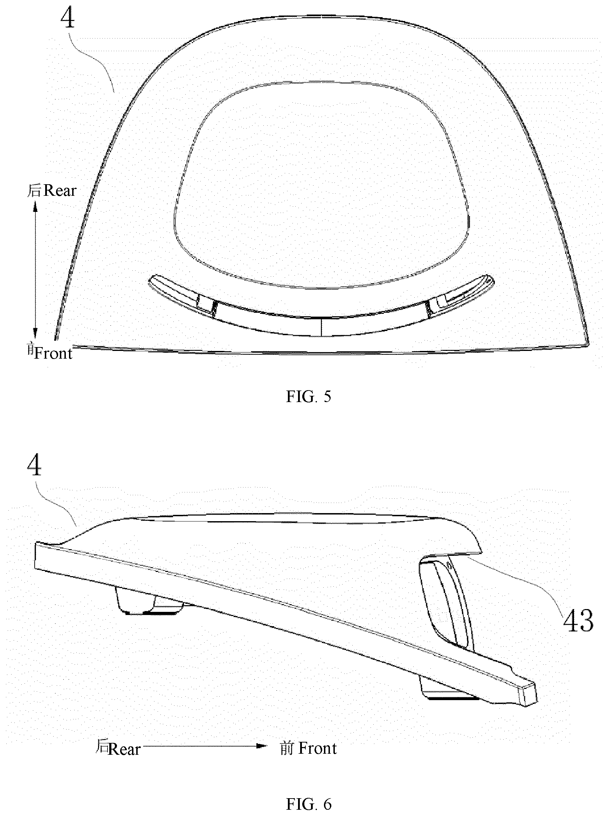

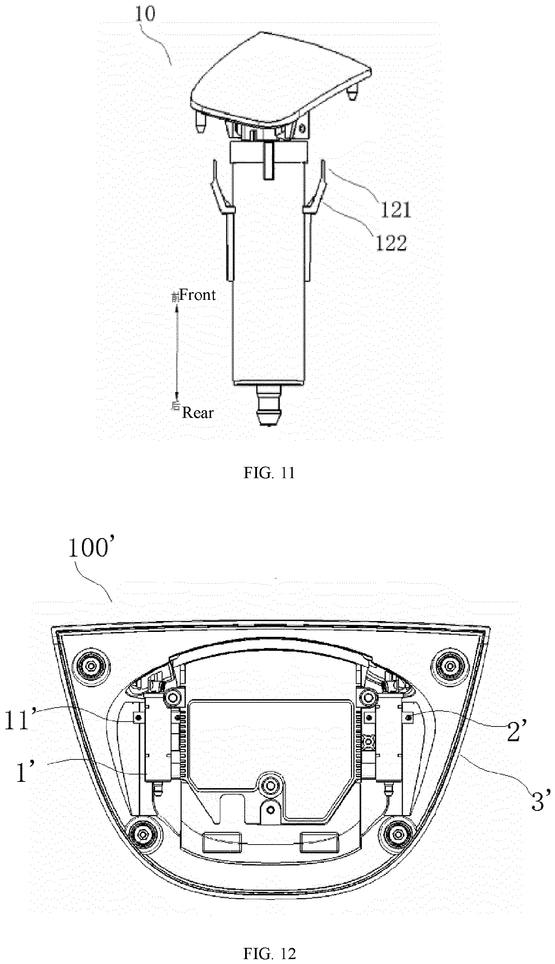

As illustrated in FIGS. 2 to 11, a radar decorative cover assembly 100 according to embodiments of the present disclosure includes a mounting base 2 and a nozzle assembly 10. The mounting base 2 has a first mounting hole 21 extending in a preset direction. The nozzle assembly 10 includes a telescopic nozzle 1 and a nozzle decorative lid 6. The nozzle decorative lid 6 is coupled to a free end of the telescopic nozzle 1, the nozzle decorative lid 6 is configured to fit with a through hole of a radar decorative cover, and the telescopic nozzle l is movably arranged between a retracted position and an extended position in the preset direction. At least part of the telescopic nozzle 1 in the retracted position is located in the first mounting hole 21, and at least part of an outer peripheral surface of the telescopic nozzle 1 in the retracted position fits with at least part of a peripheral wall surface of the first mounting hole 21. The preset direction may be a front and rear direction illustrated by an arrow in FIG. 2.

The radar decorative cover assembly 100 according to embodiments of the present disclosure, by fitting of the outer peripheral surface of the telescopic nozzle 1 and the peripheral wall surface of the first mounting hole 21, improves the mounting accuracy of the telescopic nozzle 1 on the radar decorative cover 4, and simultaneously, reduces a reserved gap between the nozzle decorative lid 6 coupled to the telescopic nozzle 1 and the through hole 41 of the radar decorative cover 4, effectively reducing the entry of dust into the radar decorative cover 4.

In some embodiments, the first mounting hole 21 is a cylindrical hole, and a first part of the outer peripheral surface of the telescopic nozzle 1 is at least part of a cylindrical surface. The first part of the outer peripheral surface of the telescopic nozzle 1 in the retracted position fits with at least part of the peripheral wall surface of the first mounting hole 21.

It should be noted that, under the same manufacturing cost, compared with the fit between a hole and a shaft having other shapes, the fit between a circular hole and a cylindrical shaft has higher fitting accuracy. Therefore, by making the first mounting hole 21 the cylindrical hole and the first part of the outer peripheral surface of the telescopic nozzle 1 at least part of the cylindrical surface, the positioning accuracy of the telescopic nozzle 1 in the radar decorative cover 4 may be further improved.

In some embodiments, part of the telescopic nozzle 1 is cylindrical, and an outer peripheral surface of the part of the telescopic nozzle 1 in the retracted position fits with at least part of the peripheral wall surface of the first mounting hole 21.

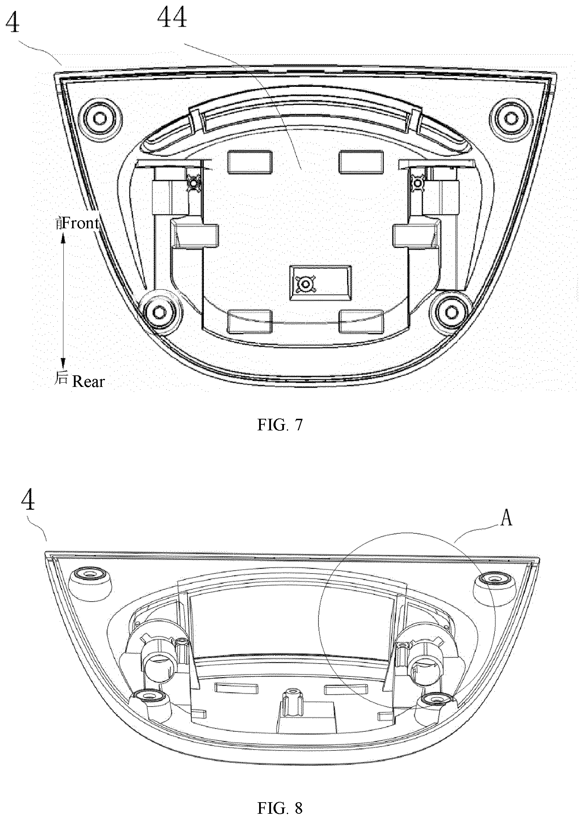

In some embodiments, the peripheral wall surface of the first mounting hole 21 defines a guide groove 22 extending along the preset direction, the outer peripheral surface of the telescopic nozzle 1 is provided with a first guide key 11 extending along the preset direction, and the first guide key 11 is movably fitted in the guide groove 22 in the preset direction. In this way, when the outer peripheral surface of the telescopic nozzle 1 is the cylindrical surface and the first mounting hole 21 is the circular hole, it may be avoided that the telescopic nozzle 1 may rotate in the first mounting hole 21, so that a spraying direction of the telescopic nozzle 1 may be aimed at a surface of the radar decorative cover 4 that needs to be cleaned. The preset direction may be a front and rear direction illustrated by an arrow in FIG. 7.

In some embodiments, the first guide key 11 has a width direction orthogonal to a radial direction and an axial direction of the telescopic nozzle 1, and a size of a cross section of the first guide key 11 in the width direction of the first guide key 11 gradually decreases in a direction away from the nozzle decorative lid 6.

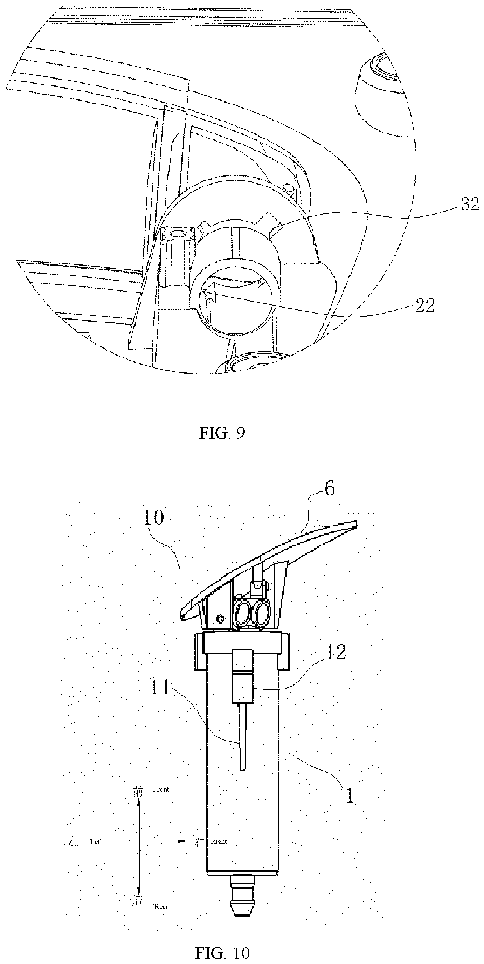

In some specific embodiments, as illustrated in FIG. 10, the width direction orthogonal to the radial direction and the axial direction of the telescopic nozzle 1 is a left and right direction. The cross section of the first guide key 11 is a cross section of the first guide key 11 perpendicular to the preset direction. A size of the cross section of the first guide key 11 in the left and right direction gradually decreases from front to rear. This not only facilitates the mounting of the telescopic nozzle 1 into the guide groove 22, but also eliminates a gap between the telescopic nozzle 1 and the guide groove 22 when the telescopic nozzle 1 is mounted in place in the guide groove 22, avoiding rotation between the telescopic nozzle 1 and the first mounting hole 21.

In some embodiments, two first guide keys 11 are provided, an axis of one of the two first guide keys 11 and an axis of the telescopic nozzle 1 are located in a first plane, and an axis of the other of the two first guide keys 11 and the axis of the telescopic nozzle 1 are located in a second plane. An angle between the first plane and the second plane is obtuse or flat, and a size of a cross section of the first guide key 11 in the radial direction of the telescopic nozzle 1 gradually decreases in the direction away from the nozzle decorative lid 6. This not only eliminates a gap between the first guide key 11 and a bottom of the guide groove 22, allowing the telescopic nozzle 1 to be stably mounted on the mounting base 2, but also avoids a deviation of the axis of the telescopic nozzle 1 from an axis of the first mounting base 21.

In some embodiments, the radar decorative cover assembly 100 further includes a radar decorative cover 4, and the radar decorative cover 4 has an accommodating cavity 44 and the through hole 41 in communication with the accommodating cavity 44. The mounting base 2 is arranged in the accommodating cavity 44, and a shape and a size of the nozzle decorative lid 6 are adapted to a shape and a size of the through hole 41. When the telescopic nozzle 1 is in the retracted position and the telescopic nozzle 1 is retracted to the shortest, an outer surface of the nozzle decorative lid 6 is flush with an outer surface of the radar decorative cover 4. In this way, a gap between a peripheral wall surface of the nozzle decorative lid 6 and a peripheral wall surface of the through hole 41 of the radar decorative cover 4 may have a certain depth, it is difficult for dust to enter the accommodating cavity 44 of the radar decorative cover 4. At the same time, the outer surface of the nozzle decorative lid 6 is flush with the outer surface of the radar decorative cover 4, which is aesthetically pleasing.

In some embodiments, the radar decorative cover 4 is provided with a support 3, and the support 3 includes a second mounting hole 31. The second mounting hole 31 is coaxial with the first mounting hole 21. The outer peripheral surface of the telescopic nozzle 1 is provided with a clip 12, and a peripheral wall surface of the second mounting hole 31 defines a slot 32. The clip 12 of the telescopic nozzle 1 in the retracted position is elastically deformed and snapped into the slot 32, and the clip 12 of the telescopic nozzle 1 in the extended position is detached from the slot 32.

In embodiments of the present disclosure, by arranging the clip 12 on the telescopic nozzle 1 and defining the slot 32 in the support 3, the telescopic nozzle 1 may be conveniently positioned in the retracted position in the front and rear direction more stably.

In some specific embodiments, the support 3 and the mounting base 2 are spaced along the front and rear direction. The clip 12 has a first step 121 located at a front end of the clip 12 and a second step 122 located at a rear end of the clip 12. A minimum distance from an edge of a front end of a step surface of the second step 122 to the axis of the telescopic nozzle 1 is greater than a minimum distance from an edge of a rear end of a step surface of the first step 121 to the axis of the telescopic nozzle 1. When the telescopic nozzle 1 is in the retracted position, the clip 12 is elastically deformed, and the second step 122 of the clip 12 is located between the support 3 and the mounting base 2. When the telescopic nozzle 1 is in the extended position, the clip 12 is elastically deformed, and the second step 122 of the clip 12 is detached from the support 3 and the mounting base 2.

In some specific embodiments, the clip 12 is located at an end of the first guide key 11 close to the nozzle decorative lid 6.

In some embodiments, two slots 32 are provided and symmetrically arranged at two sides of the axis of the telescopic nozzle 1. Two clips 12 are provided, and the two clips 12 in the retracted position may be simultaneously snapped into the two slots 32. In this way, when installing the clip 12 into the slot 32, forces of the two slots 12 exerting on the telescopic nozzle 1 are equal in magnitude and opposite in direction, avoiding the deviation of the axis of the telescopic nozzle 1 from the axis of the first mounting hole 21.

In some embodiments, the radar decorative cover assembly 100 further includes a cleaning cover 5. The outer surface of the radar decorative cover 4 defines a third mounting hole 42, and the cleaning cover 5 is arranged at the third mounting hole 42. Two nozzle assemblies 10 are provided, and the two nozzle assemblies 10 are arranged at two sides of the cleaning cover 5. In this way, when the cleaning cover 5 needs to be cleaned, two telescopic nozzles 1 may be extended simultaneously to clean the cleaning cover 5. Compared with cleaning of the cleaning cover 5 with a single telescopic nozzle, the two telescopic nozzles 1 spray more cleaning fluid and have a larger water flow, the cleaning cover 5 may be cleaned more easily, and the transparency of the cleaning cover 5 may be ensured.

In some embodiments, an outer peripheral wall of the radar decorative cover 4 defines a groove 43, and the third mounting hole 42 is located in the groove 43. A depth of the groove 43 is equal to a thickness of the cleaning cover 5. When the telescopic nozzle 1 is in the retracted position, the nozzle decorative lid 6 abuts against a bottom wall surface of the groove 43.

The telescopic nozzle 1 has a usage position and an initial position. The usage position is where the free end of the telescopic nozzle 1 extends out of the radar decorative cover 4, and the initial position is where the free end of the telescopic nozzle 1 is located inside the radar device cover 4. When the telescopic nozzle 1 moves from the extended position to the initial position, the nozzle decorative lid 6 coupled to the telescopic nozzle 1 will abut against the bottom wall surface of the groove 43 to prevent the nozzle decorative lid 6 from continuing to move into the radar decorative cover 4. At the same time, the bottom wall surface of the groove 43 is in partial surface contact with the nozzle decorative lid 6, which may reduce the entry of dust into the radar decorative cover 4.

As illustrated in FIG. 1, embodiments of the present disclosure further provide a lidar device 300 including a lidar 200 and a radar decorative cover assembly 100. The radar decorative cover assembly 100 is the radar decorative cover assembly 100 according to above embodiments of the present disclosure, and the lidar 200 is mounted in an accommodating cavity 44 of the radar decorative cover assembly 100.

The lidar device according to embodiments of the present disclosure has a small gap between the nozzle decorative lid 6 and the through hole 41 of the radar decorative cover 4, which may effectively reduce the entry of dust into the radar decorative cover 4.

The present disclosure further provides a vehicle having the above lidar device. The vehicle includes a lidar device 300, and the lidar device 300 is a lidar device 300 in the above embodiments.

In the description of the present disclosure, it should be understood that the orientation or position relationship indicated by the terms "center", "longitudinal", "transverse", "length", "width", "thickness", "up", "down", "front", "rear", "left", "right", "vertical", "horizontal", "top", "bottom", "inner", "outer", "clockwise", "counterclockwise", "axial", "radial" and "circumferential" and the like, is based on the orientation or position relationship illustrated in the accompanying drawings, which is only for the convenience of describing the present disclosure and simplifying the description, and does not indicate or imply that the referred device or element must have a specific orientation, and be constructed and operated in a specific orientation, so it cannot be understood as a limitation of the present disclosure.

In addition, the terms "first" and "second" are only used for purpose of description, and cannot be understood as indicating or implying relative importance or implicitly indicating the number of indicated technical features. Therefore, the feature defined as "first" or "second" may explicitly or implicitly include at least one such feature. In the description of the present disclosure, "a plurality of' means at least two, such as two, three, etc., unless otherwise specifically defined.

In the present disclosure, unless otherwise expressly defined, terms such as "mount", "couple", "connect", "fix" shall be understood broadly, and may be, for example, fixed connections, detachable connections, or integral connections; may also be mechanical or electrical connections or intercommunication; may also be direct connections or indirect connections via intervening media; may also be inner communications or interactions of two elements, unless otherwise specifically defined. For those skilled in the art, the specific meaning of the above terms in the present disclosure may be understood according to the specific situations.

In the present disclosure, unless otherwise expressly defined, the first feature "below", "under", "on bottom of', "above", "on", or "on top of' a second feature may include an embodiment in which the first feature is in direct contact with the second feature, or the first feature is in indirect contact with the second feature through an intermediate media. And, the first feature "above", "on", or "on top of" a second feature may include an embodiment in which the first feature is right or obliquely "above", "on", or "on top of" the second feature, or just means that the first feature is at a height higher than that of the second feature. A first feature "below", "under", or "on bottom of" a second feature may include an embodiment in which the first feature is right or obliquely "below", "under", or "on bottom of" the second feature, or just means that the first feature is at a height lower than that of the second feature.

In the description of the present specification, the description referring to terms such as "an embodiment", "some embodiments", "an example", "a specific example" or "some examples" means that a particular feature, structure, material, or characteristic described in connection with the embodiment or example is included in at least one embodiment or example of the present disclosure. Thus, the appearances of these terms in various places throughout this specification are not necessarily referring to the same embodiment or example of the present invention. Furthermore, the particular features, structures, materials, or characteristics may be combined in any suitable manner in one or more embodiments or examples. In addition, without contradiction, those skilled in the art may combine and unite different embodiments or examples or features of the different embodiments or examples described in this specification.

Although the embodiments of the present disclosure have been illustrated and described above, it may be understood that the above embodiments are illustrative and shall not be understood as limitation to the present disclosure, and changes, modifications, alternatives and variations may be made in the above embodiments within the scope of the present disclosure by those skilled in the art.

All embodiments of the present disclosure may be implemented independently or in combination with other embodiments, which are all regarded as the scope of protection required by the present disclosure.

## Claims

1. A radar decorative cover assembly, comprising:
a mounting base having a first mounting hole extending in a preset direction; and
a nozzle assembly comprising a telescopic nozzle and a nozzle decorative lid, the nozzle decorative lid being coupled to a free end of the telescopic nozzle, the nozzle decorative lid being configured to fit with a through hole of a radar decorative cover, and the telescopic nozzle being movably arranged between a retracted position and an extended position in the preset direction, wherein at least part of the telescopic nozzle in the retracted position is located in the first mounting hole, and at least part of an outer peripheral surface of the telescopic nozzle in the retracted position fits with at least part of a peripheral wall surface of the first mounting hole.

2. The radar decorative cover assembly according to claim 1, wherein the first mounting hole is a cylindrical hole, a first part of the outer peripheral surface of the telescopic nozzle is at least part of a cylindrical surface, the first part of the outer peripheral surface of the telescopic nozzle in the retracted position fits with at least part of the peripheral wall surface of the first mounting hole.

3. The radar decorative cover assembly according to claim 1 or 2, wherein the peripheral wall surface of the first mounting hole defines a guide groove extending along the preset direction, the outer peripheral surface of the telescopic nozzle is provided with a first guide key extending along the preset direction, and the first guide key is movably fitted in the guide groove in the preset direction.

4. The radar decorative cover assembly according to claim 3, wherein the first guide key has a width direction orthogonal to a radial direction and an axial direction of the telescopic nozzle, and a size of a cross section of the first guide key in the width direction of the first guide key gradually decreases in a direction away from the nozzle decorative lid.

5. The radar decorative cover assembly according to claim 3 or 4, wherein two first guide keys are provided, an axis of one of the two first guide keys and an axis of the telescopic nozzle are located in a first plane, an axis of the other of the two first guide keys and the axis of the telescopic nozzle are located in a second plane, an angle between the first plane and the second plane is obtuse or flat, and a size of a cross section of the first guide key in a radial direction of the telescopic nozzle gradually decreases in a direction away from the nozzle decorative lid.

6. The radar decorative cover assembly according to any one of claims 1-5, further comprising a radar decorative cover having an accommodating cavity and the through hole in communication with the accommodating cavity, wherein the mounting base is arranged in the accommodating cavity, a shape and a size of the nozzle decorative lid is adapted to a shape and a size of the through hole, and when the telescopic nozzle is in the retracted position and the telescopic nozzle is retracted to the shortest, an outer surface of the nozzle decorative lid is flush with an outer surface of the radar decorative cover.

7. The radar decorative cover assembly according to any one of claims 1-6, further comprising a support defining a second mounting hole coaxial with the first mounting hole, wherein the outer peripheral surface of the telescopic nozzle is provided with a clip, a peripheral wall surface of the second mounting hole defines a slot, the clip of the telescopic nozzle in the retracted position is elastically deformed and snapped into the slot, and the clip of the telescopic nozzle in the extended position is detached from the slot.

8. The radar decorative cover assembly according to claim 7, wherein the clip is located at an end of the first guide key close to the nozzle decorative lid.

9. The radar decorative cover assembly according to claim 7 or 8, wherein two slots are provided and symmetrically arranged at two sides of the axis of the telescopic nozzle, two clips are provided, and the two clips in the retracted position are simultaneously snapped into the two slots.

10. The radar decorative cover assembly according to any one of claims 7-9, wherein the support and the mounting base are spaced along a front and rear direction, the clip has a first step located at a front end of the clip and a second step located at a rear end of the clip, and a minimum distance from an edge of a front end of a step surface of the second step to the axis of the telescopic nozzle is greater than a minimum distance from an edge of a rear end of a step surface of the first step to the axis of the telescopic nozzle; when the telescopic nozzle is in the retracted position, the clip is elastically deformed, and the second step of the clip is located between the support and the mounting base; and when the telescopic nozzle is in the extended position, the clip is elastically deformed, and the second step of the clip is detached from the support and the mounting base.

11. The radar decorative cover assembly according to any one of claims 1-10, further comprising a cleaning cover, wherein an outer surface of the radar decorative cover defines a third mounting hole, the cleaning cover is arranged at the third mounting hole, two nozzle assemblies are provided, and the two nozzle assemblies are arranged at two sides of the cleaning cover.

12. The radar decorative cover assembly according to claim 11, wherein an outer peripheral wall of the radar decorative cover defines a groove, the third mounting hole is located in the groove, and a depth of the groove is equal to a thickness of the cleaning cover.

13. A lidar device, comprising a lidar and a radar decorative cover assembly according to any one of claims 1-12, wherein the lidar is mounted in an accommodating cavity of the radar decorative cover assembly.

14. A vehicle, comprising a lidar device according to claim 13.
